Europäisches Patentamt

European Patent Office

Office européen des brevets

(11) Veröffentlichungsnummer: **0 095 799**
**A1**

# (12) EUROPÄISCHE PATENTANMELDUNG

(21) Anmeldenummer: **83200687.8**

(22) Anmeldetag: **16.05.83**

(51) Int. Cl.³: **F 16 K 31/28,** F 16 K 21/18,
F 16 K 49/00, B 67 D 5/34,
B 65 D 90/26

(30) Priorität: **26.05.82 CH 3241/82**

(43) Veröffentlichungstag der Anmeldung: **07.12.83**
**Patentblatt 83/49**

(84) Benannte Vertragsstaaten: **AT DE FR IT**

(71) Anmelder: **Giesserei und Metallwarenfabrik Josef Rieger AG, Niklaus-Wenglstrasse 40, CH-2540 Grenchen (CH)**

(72) Erfinder: **Rieger, Josef, Aller Heiligenstrasse 128, CH-2540 Grenchen (CH)**

(74) Vertreter: **Velgo, Miroslav et al, Bovard AG Patentanwälte VSP Optingenstrasse 16, CH-3000 Bern 25 (CH)**

(54) **Automatische Überfüllsicherungsvorrichtung.**

(57) Im Bauchteil des Gehäuses (1) der Überfüllsicherungsvorrichtung ist ein Heizring (21) eingegossen, der aus einem elektrischen Widerstandsdraht besteht. Durch diese Massnahme kann der Behälter auch mit Schweröl gefüllt werden, weil die beweglichen Teile der Vorrichtung während des Durchflusses von Schweröl durch dieselben nicht verklebt werden. Neben dem Schwimmer (12) sind an Tragstangen (22) schwenkbar angeordnete Gewichte (23) vorgesehen, die bei der aufwärtigen Bewegung des Schwimmers (12) von seinen Sprossen (14, 15) getragen werden. Die Gewichte (23) stehen mit dem Kolben (4) der Vorrichtung in Verbindung. Der Schwimmer (12) ist unabhängig von den Tragstangen (22) mit den Gewichten (23) schwenkbar angeordnet. Die Tragstangen (22) mit den Gewichten (23) wirken als zweiter Schwimmer. Die Überfüllsicherungsvorrichtung ist auch für Schweröl verwendbar und stellt eine Sicherung gegen den zu schnellen Aufbaudruck und somit gegen eine zu schnelle Schliessung des Durchflussweges für die Flüssigkeit dar.

0095799

## Automatische Ueberfüllsicherungsvorrichtung

Die Erfindung geht aus von einer automatischen Ueberfüllsicherungsvorrichtung zum Einbau in die Füllleitung eines Flüssigkeitsbehälters, mit einem einerseits mit der Füllleitung und andererseits mit einem Untersatz verschraubbaren Gehäuse, einem Zylinder, der, von oben durch einen Deckel abgeschlossen, in seinem unteren Teil Durchlassöffnungen für die Flüssigkeiten 7 aufweist und vom Gehäuse mit Abstand umgeben ist, so dass zwischen ihm und dem Gehäuse ein einen ersten Durchflussweg für die Flüssigkeit bildender Kanal entsteht, einem im Zylinder auf- und abbewegbaren, die Durchlassöffnungen verschliessenden oder freigebenden Kolben, dessen Kolbenstange an einer quer zur Gehäuselängsachse den Untersatz durchsetzenden Vierkanthülse angekoppelt ist, mit welcher Gestänge eines ausserhalb des Gehäuses angeordneten Schwimmers in Verbindung stehen, welche Gestänge beidseitig des Schwimmers vorgesehen sind, und mit einem in die Gehäusewand eingebauten Doppelventil, das einen zweiten Durchflussweg für die Flüssigkeit bildet.

Eine solche Vorrichtung ist in der deutschen Offenlegungsschrift Nr. 27 01 351 beschrieben.

Der im Patentanspruch 1 angegebenen Erfindung liegt die Aufgabe zugrunde, die bekannte automatische Ueberfüllsicherungsvorrichtung weiter zu verbessern, in dem Sinne, dass die Vorrichtung auch für Schweröl verwendbar gemacht wird. Desweiteren soll bei der Vorrichtung eine Sicherung gegen den zu schnellen Aufbaudruck und somit gegen eine zu schnelle Schliessung des Durchflussweges für die Flüssigkeit erreicht werden.

Diese Aufgaben werden bei einer automatischen Ueberfüllsicherungsvorrichtung nach dem Oberbegriff des Patentanspruches 1 durch die in der Kennzeichnung des Patentanspruches 1 angeführten Merkmale gelöst.

Der Erfindungsgegenstand wird nachstehend anhand der Zeichnung beispielsweise näher erläutert. Es zeigen

Fig. 1 eine Ansicht der erfindungsgemässen Ueberfüllsicherungsvorrichtung, teilweise im Schnitt, deren Gewichte und Schwimmer sich in der ersten Phase der Füllung des Behälters befinden,

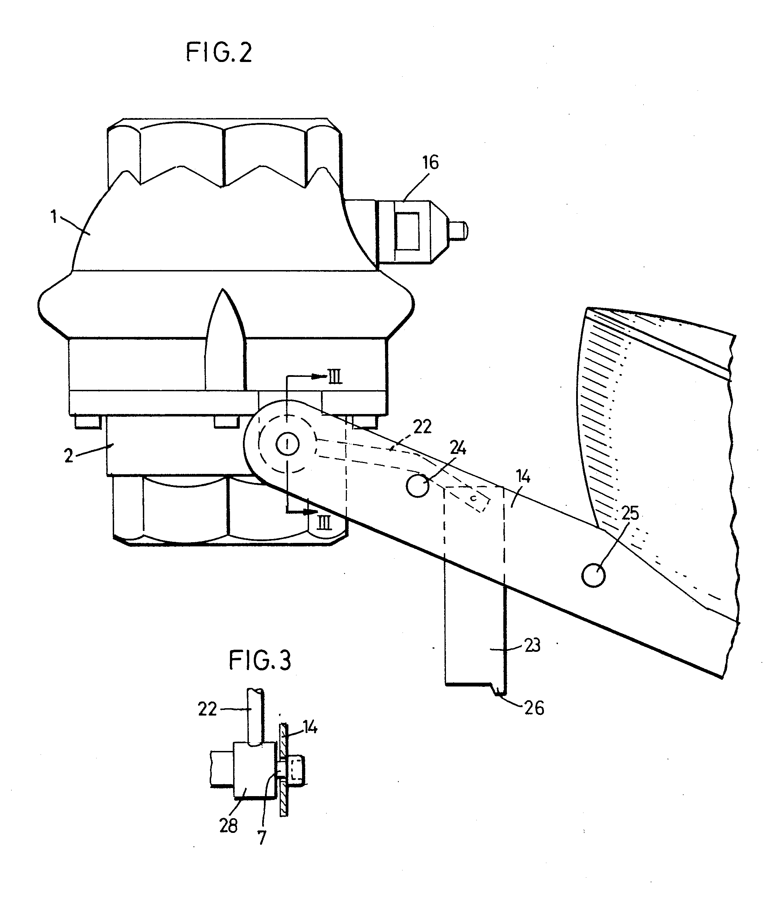

Fig. 2 eine Ansicht der erfindungsgemäsen Ueberfüssicherungsvorrichtung nach der Fig. 1, in welcher sich die Gewichte und die Gestänge des Schwimmers in der zweiten Phase des Behälters befinden und

Fig. 3 einen Teilschnitt entlang der Linie III-III der Fig. 2.

Die automatische Ueberfüllsicherungsvorrichtung umfasst ein Gehäuse 1, das mit einem Untersatz 2 mittels Schrauben 13 zusammengehalten ist, einen am Untersatz 2 an Gestängen 14 schwenkbar angeordneten Schwimmer 12 und zwei an Tragstangen 22 am Untersatz 2 schwenkbar angeordnete Gewichte 23. Das Gehäuse 1 sowie der Untersatz 2 sind an ihren voneinander entfernten Endteilen mit Innengewinden 18 versehen, in welche Gewinde die entsprechenden Teile einer nicht dargestellten Füllleitung z. B. von einem Tankwagen zu einem Flüssigkeitsbehälter einschraubbar sind.

Im Gehäuse 1 ist ein Zylinder 3 angeordnet, der sich am Untersatz 2 abstützt und oben durch einen konisch gestalteten Deckel 5 mit einer Entlüftungsklappe 15 abgeschlossen ist, der mit dem Zylinder 3 mittels Schrauben 13 verschraubt ist. Der Zylinder 3 ist im Abstand von dem Gehäuse 1 angeordnet, so dass zwischen dem Zylinder 3 und dem Gehäuse 1 um den Zylinder herum ein Flüssigkeitskanal 20 entsteht. Im unteren Teil des Zylinders 3 sind mehrere ringförmige Oeffnungen 17 vorgesehen. Beim Füllen des Behälters mit Flüssigkeit fliesst die Flüssigkeit aus der nicht dargestellten Füllleitung durch den Kanal 20, die Oeffnungen 17 des Zylinders 3, den Untersatz 2 und den anderen Teil der nicht dargestellten Füllleitung in einen nicht dargestellten Behälter, der überlicherweise ein Oeltank ist. Dies stellt den ersten Durchflussweg für die Flüssigkeit dar.

Im Zylinder 3 ist ein auf- und abbewegbarer Kolben 4 angeordnet, dessen Kolbenstange 8 nach unten ausgeführt ist. Die oben an der Kolbenstange 8 angebrachte Kugel 19 ist durch einen Gelenkdeckel 6 gesichert, wobei das untere Ende der Kolbenstange 8 mittels eines Stiftes 9 mit auf einer Vierkanthülse 11 aufgesetzten Hebelarmen 10 schwenkbar verbunden ist. Beidseitig des Schwimmers 12 sind Gestänge 14 vorgesehen, die von aussen am Untersatz 2 frei schwenkbar angebracht sind. Das in der Gehäusewand eingebaute Doppelventil 16, dessen Funktion eingehend in der oben erwähnten deutschen Offenlegungsschrift 27 01 351 beschrieben ist, stellt einen zweiten Durchlassweg für die Flüssigkeit dar.

Wenn z. B. Schweröl in den Oeltank eingefüllt werden soll, muss es warm gemacht werden, so dass seine Temperatur beim Einfüllen zwischen 60 und 70° C liegt. Diese Temperatur des Schweröles muss auch in dem Tankwagen und im Tank das ganze Jahr durch eingehalten werden.

Um das Verkleben der beweglichen Teile, insbesondere des Kolbens 4 und der verschiedenen Achsen, durch das Schweröl während des Durchflusses durch die Vorrichtung zu vermeiden, wird in den Bauchteil des Gehäuses 1 ein Heizring 21 eingebaut. Der Heizring wird in das Gehäuse 1 aus Aluminium oder Aluminiumlegierung eingegossen. Der Heizring ist ein Widerstandsring, der aus Chromnickelstahldraht besteht. Die Aufheizung des Heizringes 21 wird durch Zuführung elektrischen Stromes erreicht.

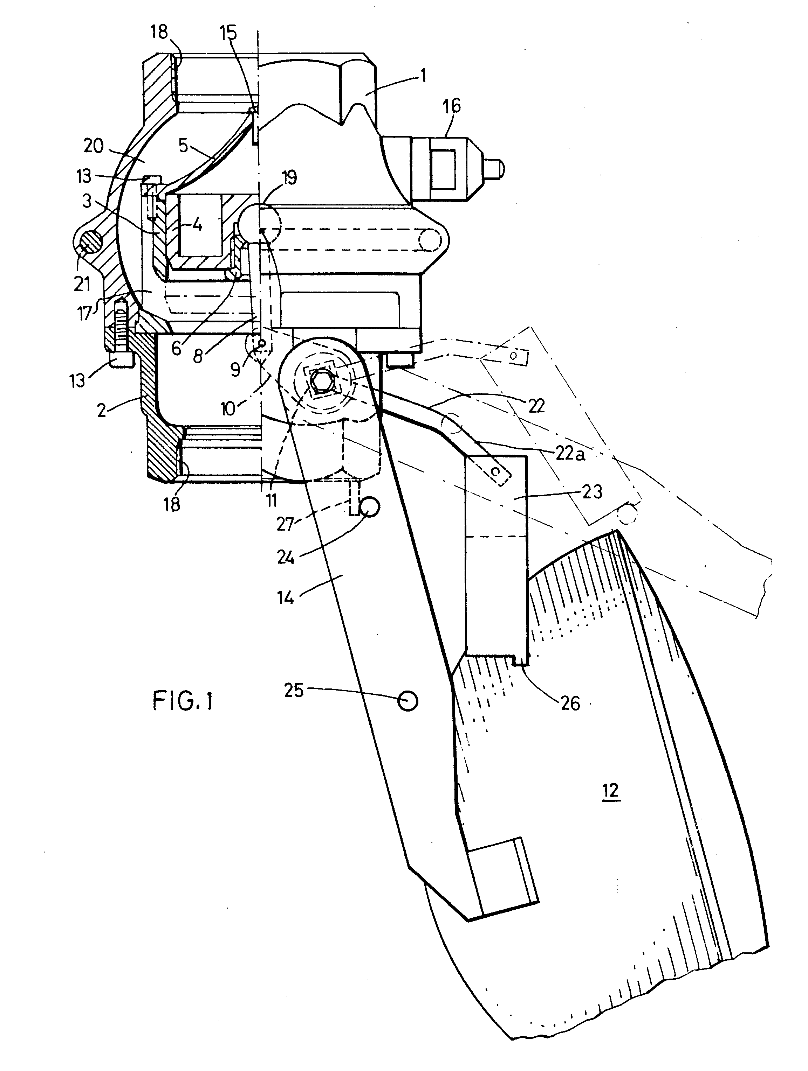

Wenn der Behälterflüssigkeitsstand niedrig ist, wird durch ihn der Schwimmer 12 nicht beeinflusst und bleibt in seiner unteren Stellung, die die offene Stellung darstellt (siehe Fig. 1). Dementsprechend befindet sich auch der Kolben 4 in seiner oberen Stellung, so dass die Oeffnungen 17 im unteren Teil des Zylinders 3 durch den Kolben 4 nicht abgeschlossen sind; in dieser Stellung haben die Oeffnungen 17 den grössten Durchlassquerschnitt. Beim Füllen des Behälters mit Flüssigkeit wird der Schwimmer 12 durch die steigende Flüssigkeit angehoben (siehe die strichpunktierte Stellung in der Fig. 1). Somit beginnt auch der Schliessvorgang des ersten Durchflussweges, welcher Schliessvorgang durch den sich nach unten bewegenden Kolben 4 ausgeführt wird. Durch die Bewegung des Kolbens 4 nach unten werden nämlich die Oeffnungen 17 im Zylinder 3 immer mehr abgeschlossen, so dass die Durchlassquerschnittsfläche der Oeffnungen immer kleiner wird.

Von innen der Gestänge 14 des Schwimmers 12 sind an der Vierkanthülse 11 ausserhalb des Untersatzes 2 in Fassungen 28 zwei Tragstangen 22 fest aufgesetzt, deren jedes Ende 22a ein Gewicht 23 trägt. Die Gewichte 23 sind an den Tragstangen 22 in Vertikalebenen begrenzt schwenkbar angeordnet. Die Ausschwenkung der Gewichte 23, die die Form von vollen Zylindern haben, liegt im Bereich von annähernd 90°.

0095799

Von aussen der Tragstangen 22 und unabhängig von ihnen sind an Schrauben 7, die die verlängerte Achse der Vierkanthülse 11 bilden, die Gestänge 14 frei schwenkbar angeordnet. Die Gestänge 14 sind durch zwei voneinander entfernte Sprossen 24, 25 verbunden. Die erste Sprosse 24, die dem Untersatz 2 näherliegt als die zweite Sprosse 25 ist zum Halten der Tragstangen 22 der Gewichte 23 bei der aufwärtigen Bewegungen des Schwimmers 12 während der zweiten Phase der Füllung des Behälters bestimmt. Die zweite, vom Untersatz 2 weiterliegende Sprosse 25 ist zum Halten der Gewichte 23 bei der aufwärtigen Bewegung des Schwimmers 12 während der ersten Phase der Füllung des Behälters bestimmt.

Bei der aufwärtigen Bewegung des Schwimmers 12 während der ersten Phase der Füllung des Behälters kommen Vorsprünge 26 an den freien Stirnseiten der Gewichte 23 zum Anliegen an die zweite Sprosse 25. Während der ersten Phase der Füllung wird der Schwimmer 12 von seiner niedrigsten Stellung, in welcher er sich gegen einen Anschlag 27 am unteren Rande des Untersatzes 2 abstützt, angehoben. Gleichzeitig mit der Anhebung des Schwimmers 12 werden die, sich gegen die zweite Sprosse 25 abstützenden Gewichte 23 mitgenommen. Durch diese Bewegung der Gewichte 23 wird auch der Kolben 4 nach unten bewegt. In der Schlussphase des Schliessvorganges wird die Durchlassquerschnittsfläche der Oeffnungen so klein, dass sich im Kanal 20 ein hydraulischer Druck aufzubauen beginnt. In dieser letzten Phase wird der Schliessvorgang keineswegs durch die aufwärtige Bewegung des Schwimmers 12, sondern durch den im Kanal 20 aufgebauten hydraulischen Druck beherrscht. Der Druck wirkt nun durch die Oeffnungen 17 des Zylinders 3 hindurch auf die vertikale Seitenfläche des Kolbens 4. Der immer höher werdende Druck reisst schliesslich den Kolben 4 in seine Schliessstellung, in welcher er mit seiner abgeschrägten unteren Kante zum Anliegen an den konischen Sitz des Zylinders 3 kommt. Somit wird der erste Durchflussweg durch den Kanal 20 in den Untersatz 2 abgesperrt.

In diesem Moment heben sich die Tragstangen 22 und mit ihnen die Gewichte 23 von der zweiten Sprosse 25 ab. Nun wird auch die Flüssigkeitszufuhr (z. B. durch Abstellung des Motors des Tankwagens) in die Füllleitung abgestellt. Wegen des verminderten Druckes im Kanal 20 öffnet sich das Doppelventil 16, so dass ein Teil der in der Füllleitung übrig gebliebenen Flüssigkeit durch das Doppelventil 16 in den Behälter ausfliessen kann. In den Kanal 20 kann mindestens teilweise Luft eindringen, durch welche der dort herrschende Druck weiter herabgesetzt wird. Dadurch wird die Wirkung des Druckes auf die Seitenfläche des Kolbens 4 kleiner, der Kolben kann sich wieder nach oben heben, wodurch auch die gehobenen Gewichte 23 herunterfallen werden, wobei die die Gewichte 23 tragenden Stangen 22 zum Anliegen an die erste Sprosse 24 kommen.

Die Ueberfüllsicherung ist offen, so dass wieder mit vollem Druck gearbeitet werden kann. Man hat nun die Möglichkeit, noch etwa 800 l Flüssigkeit mit voller Kraft in den Behälter zu füllen. Dies wird zur Entleerung der Füllleitung benötigt, wenn die Flüssigkeit z. B. in einen auf einer Anhöhe liegenden Behälter gepumpt werden muss.

Durch das steigende Flüssigkeitsniveau im Behälter, wird der Schwimmer 12 und mit ihm die in der Flüssigkeit eingetauchten Gewichte 23 angehoben. Dies ist die zweite Phase der Füllung. Nach dem Entleeren der etwa 800 l aus der Füllleitung kommt der Schwimmer 12 mit den Gewichten 23 so hoch, dass die Vorrichtung ganz geschlossen wird (d. h. beide Durchflusswege). Sollte nun z. B. der Chauffeur des Tankwagens während der zweiten Phase der Einfüllung den Hahn am Tankwagen nicht schliessen, kann keine Flüssigkeit mehr durch die Ueberfüllsicherungsvorrichtung durchfliessen.

Die oben beschriebene Vorrichtung arbeitet völlig automatisch, so dass nach dem Abstellen der Flüssigkeitszufuhr nach der ersten Phase der Füllung keine weiteren Vorkehrungen, wie Belüftung der Füllleitung, getroffen werden müssen. Die Gewichte 23 füllen hier eigentlich die Funktion eines zweiten Schwimmers aus, durch welchen eine zuschnelle Schliessung des ersten Durchflussweges für die Flüssigkeit vermieden wird.

- 8 -

0095799

<u>PATENTANSPRUECHE</u>

1. Automatische Ueberfüllsicherungsvorrichtung zum Einbau in die Füllleitung eines Flüssigkeitsbehälters, mit einem einerseits mit der Füllleitung und andererseits mit einem Untersatz (2) verschraubbaren Gehäuse (1), einem Zylinder (3), der, von oben durch einen Deckel (5) abgeschlossen, in seinem unteren Teil Durchlassöffnungen (17) für die Flüssigkeiten 7 aufweist und vom Gehäuse (1) mit Abstand umgeben ist, so dass zwischen ihm und dem Gehäuse (1) ein einen ersten Durchflussweg für die Flüssigkeit bildender Kanal (20) entsteht, einem im Zylinder (3) auf- und abbewegbaren, die Durchlassöffnungen (17) verschliessenden oder freigebenden Kolben (4), dessen Kolbenstange (8) an einer quer zur Gehäuselängsachse den Untersatz (2) durchsetzenden Vierkanthülse (11) angekoppelt ist, mit welcher Gestänge (14) eines ausserhalb des Gehäuses (1) angeordneten Schwimmers (12) in Verbindung stehen, welche Gestänge beidseitig des Schwimmers (12) vorgesehen sind, und mit einem in die Gehäusewand eingebauten Doppelventil (16), das einen zweiten Durchflussweg für die Flüssigkeit bildet, dadurch gekennzeichnet, dass im Bauchteil des Gehäuses (1) über seinen gesamten Umfang ein Heizmittel (21) eingebaut ist und dass an der Vierkanthülse (11) ausserhalb des Untersatzes (2) zwei Tragstangen (22) von Gewichten (23) fest aufgesetzt sind, welche Gewichte (23) an den Tragstangen (22) in Vertikalebenen begrenzt schwenkbar angeordnet sind, und die Gestänge (14) des Schwimmers (12) ausserhalb der Tragstangen (22) und unabhängig von ihnen an einer verlängerten Achse (7) der Vierkanthülse (11) frei schwenkbar angeordnet sind.

2. Vorrichtung nach Patentanspruch 1, dadurch gekennzeichnet, dass das Heizmittel (21) ein im Bauchteil des Gehäuses (1) eingegossener Widerstandsring aus Chromnickeldraht ist, der durch elektrischen Strom heizbar ist.

3. Vorrichtung nach Patentanspruch 1, dadurch gekennzeichnet, dass das Ende (22a) jeder Tragstange (22), das das Gewicht (23) trägt, von dem übrigen Tragstangenteil nach unten abgebogen ist, und dass jedes Gewicht (23) die Form eines vollen Zylinders hat, der an der Tragstange (22) im Bereich von annähernd 90° ausschwenkbar ist.

4. Vorrichtung nach Patentanspruch 1, dadurch gekennzeichnet, dass die Gestänge (14) des Schwimmers (12) durch zwei voneinander entfernte Sprossen (24, 25) verbunden sind, wobei die erste, dem Untersatz (2) näher liegende Sprosse (24) zum Halten der Tragstangen (22) der Gewichte (23) bei der aufwärtigen Bewegung des Schwimmers (12) während der zweiten Phase der Füllung des Behälters und die zweite, vom Untersatz (2) weiter liegende Sprosse (25) zum Halten der Gewichte (23) bei der aufwärtigen Bewegung des Schwimmers (12) während der ersten Phase der Füllung des Behälters dient.

5. Vorrichtung nach den Patentansprüchen 3 und 4, dadurch gekennzeichnet, dass jedes Gewicht (23) an seiner freien Stirnfläche einen Vorsprung (26) aufweist, der bei der aufwärtigen Bewegung des Schwimmers (12) während der ersten Phase der Füllung des Behälters an die zweite Sprosse (15) zum Anliegen kommt.

FIG.1

FIG.2

FIG.3

# 0095799

**Europäisches Patentamt**

## EUROPÄISCHER RECHERCHENBERICHT

Nummer der Anmeldung

EP 83 20 0687

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 305 316 (STAUFEN SPEDITION R. SEIBOLD) * Insgesamt * | 1 | F 16 K 31/28 F 16 K 21/18 F 16 K 49/00 B 67 D 5/34 B 65 D 90/26 |
| A | US-A-3 733 459 (C.M. LENGSTORF) | | |
| A | CH-A- 430 585 (E. RAUBER) | | |
| A | FR-A-2 439 922 (C.L. PEROLO) | | |
| A | FR-A-2 437 557 (A. PETIT & CIE.) | | |
| A | FR-A-2 335 765 (B. GRANDPIERRE) | | RECHERCHIERTE SACHGEBIETE (Int. Cl. 3) |
| A | FR-A-2 300 951 (G. LAFON) | | F 16 K 31/00 F 16 K 21/00 F 16 K 49/00 B 67 D 5/00 B 65 D 90/00 |

Der vorliegende Recherchenbericht wurde für alle Patentansprüche erstellt.

| Recherchenort DEN HAAG | Abschlußdatum der Recherche 07-09-1983 | Prüfer DE SMET F.P. |
|---|---|---|